# EUROPÄISCHE PATENTSCHRIFT

(11) **EP 2 779 801 B1**
(45) Veröffentlichungstag und Bekanntmachung des Hinweises auf die Patenterteilung: **21.11.2018**
(21) Anmeldenummer: 14159906.8
(22) Anmeldetag: 14.03.2014
(51) Int. Cl.: H05B 37/02

(54) **Beleuchtungssystem und Verfahren zum Steuern eines Beleuchtungssystems**
Lighting system and method for controlling a lighting system
Système d'éclairage et procédé de commande d'un système d'éclairage

(30) Priorität: 14.03.2013 DE 102013204479
(43) Veröffentlichungstag der Anmeldung: 17.09.2014
(73) Patentinhaber: Zumtobel Lighting GmbH, 6850 Dornbirn (AT)
(72) Erfinder: Olariu, Cristian, 6850 Dornbirn (AT)
(74) Vertreter: Thun, Clemens

(56) Entgegenhaltungen:
- US-A1- 2004 160 199
- US-A1- 2008 265 799

## Beschreibung

Die vorliegende Erfindung betrifft ein Beleuchtungssystem, welches mehrere Leuchten aufweist, sowie ein Verfahren zum Steuern eines derartigen Beleuchtungssystems.

Größere Beleuchtungssysteme, die eine Vielzahl von Leuchten aufweisen, welche in einem oder mehreren Räumen eines Gebäudes angeordnet sind, weisen unterschiedlichste Möglichkeiten zum Ansteuern der Leuchten auf. Um ein aufeinander abgestimmtes Verhalten der Leuchten zu erzielen, ist in der Regel vorgesehen, dass diese von einer zentralen Steuereinheit aus angesteuert werden, wobei die Steuerinformationen über entsprechende Datenleitungen oder auch drahtlos übermittelt werden können. Insbesondere die Ansteuerung von einer Zentrale aus gewährleistet dabei, dass Leuchten ein einheitliches Erscheinungsbild aufweisen und sich - beispielsweise tageszeitabhängig oder abhängig von der Intensität des Tageslichts - in gleicher Weise verhalten.

Darüber hinaus ist allerdings oftmals auch eine individuelle oder situationsbedingte Ansteuerung zumindest einzelner Leuchten gewünscht. Beispielsweise stehen in der Regel auch lokale Bedienelemente zur Verfügung, durch welche Benutzer das Verhalten zumindest eines Teils der Leuchten individuell beeinflussen können. Auch kann mit Hilfe von Sensoren ein Teil der Leuchten derart gesteuert werden, dass diese lediglich dann eingeschaltet werden, wenn sich im Erfassungsbereich z.B. eines Anwesenheitssensors Personen aufhalten.

Um die zahlreichen Ansteuermöglichkeiten nutzen zu können ist es in der Regel erforderlich, die Leuchten einer digitalen Kommunikation individuell bzw. zumindest in Gruppen ansprechen zu können. Dies erfordert das Zuweisen von Betriebsadressen, welche dann Bestandteil der übermittelten digitalen Steuerinformationen sind. Diese Betriebsadressen werden in der Regel während der Installation bzw. Inbetriebnahme des Beleuchtungssystems vergeben und derart gewählt, dass sie eine Anordnung der Leuchten innerhalb eines Raums bzw. eines Gebäudes berücksichtigen. Im Rahmen dieser Adressvergabe können die Leuchten ferner auch unterschiedlichen Gruppen zugewiesen werden, welche bei Übermittlung entsprechender Gruppenbefehle dann einheitlich angesteuert werden.

Für das Vergeben der Betriebsadressen an die Leuchten sind aus dem Stand der Technik unterschiedlichste Vorgehensweisen bekannt. Nahezu alle gängigen Verfahren erfordern allerdings, dass jede einzelne Leuchte durch eine für die Adressvergabe zuständige Person in irgendeiner Art und Weise identifiziert werden muss und dann die entsprechende Adressinformation im Rahmen eines Steuerbefehls an die Leuchte übermittelt und dort gespeichert wird. Bei einer größeren Anzahl von Leuchten ergibt sich hier ein relativ komplexer Verfahrensablauf, der eine längere Zeit in Anspruch nimmt.

Aus der US 2008/265799 A1 ist ein Beleuchtungssystem bekannt, bei dem Leuchten aufgrund zahlreicher Sensorsignale angesteuert werden. Außerdem ist in dem Beleuchtungssystem dann auch eine Sprachsteuerung vorgesehen.

Der vorliegenden Erfindung liegt die Aufgabenstellung zugrunde, eine neuartige Möglichkeit zum Steuern eines Beleuchtungssystems anzugeben, welche insbesondere für einen Benutzer komfortablere Möglichkeiten zum Ansteuern der Leuchten aber auch zur Inbetriebnahme des Systems bietet.

Die Aufgabe wird durch ein Beleuchtungssystem mit den Merkmalen des Anspruchs 1 sowie durch ein Verfahren zum Betreiben eines Beleuchtungssystems gemäß Anspruch 8 gelöst. Vorteilhafte Weiterbildungen der Erfindung sind Gegenstand der abhängigen Ansprüche.

Grundgedanke der vorliegenden Erfindung ist, Steuerinformationen für die Leuchten eines Beleuchtungssystems auf Basis akustischer Signale zu erzeugen. Diese zur Ansteuerung der Leuchten genutzten akustischen Signale können dabei reine Geräusche sein, wobei in diesem Fall die Lautstärke bzw. Intensität sowie der Ort der Abgabe des Signals die Art und Weise der Ansteuerung bestimmt, es kann sich insbesondere allerdings auch um Sprachbefehle handeln, die im Rahmen einer Spracherkennung erkannt und in Steuerbefehle für die Leuchten umgesetzt werden. Die Sprachsteuerung von Geräten ist zwar insbesondere aus anderen Gebieten der Technik bereits bekannt, wesentlich für die vorliegende Erfindung ist allerdings, dass es sich im vorliegenden Fall nicht um eine Ansteuerung von Einzelgeräten bzw. Einzelleuchten handelt sondern stattdessen mit Hilfe der akustischen Signale, insbesondere der Sprachbefehle, eine Ansteuerung einer größeren Gruppe von Leuchten erfolgt.

Erfindungsgemäß wird deshalb ein Beleuchtungssystem vorgeschlagen, welches mehrere Leuchten sowie Mittel zum Erfassen akustischer Signale und Mittel zum Auswerten der erfassten akustischen Signale aufweist, wobei darüber hinaus zumindest eine Steuereinheit vorgesehen ist, welche auf Basis der ausgewerteten akustischen Signale Steuerinformationen generiert und an die Leuchten übermittelt. Die auf Basis der ausgewerteten akustischen Signale generierten Steuerinformationen betreffen hierbei eine Konfiguration des Beleuchtungssystems, wobei das Beleuchtungssystem derart ausgestaltet ist, dass bei der Konfiguration des Beleuchtungssystems die Leuchten verschiedenen Gruppen zugeordnet werden. Wie bereits erwähnt kann das Auswerten der akustischen Signale sowohl eine Bewertung der Intensität der Signale als auch eine Spracherkennung umfassen.

Ferner wird erfindungsgemäß ein Verfahren zum Betreiben eines Systems, welches mehrere Leuchten aufweist, vorgeschlagen, wobei akustische Signale erfasst und ausgewertet werden und auf Basis dieser Signale Steuerbefehle für die Leuchten generiert werden. Die auf Basis der ausgewerteten akustischen Signale generierten Steuerbefehle betreffen hierbei eine Konfiguration des Beleuchtungssystems, wobei bei der Konfiguration des Beleuchtungssystems die Leuchten verschiedenen Gruppen zugeordnet werden.

Unter der Formulierung "Betreiben des Systems" soll dabei nachfolgend nicht nur verstanden werden, dass während des eigentlichen Betriebs des Beleuchtungssystems Steuerbefehle generiert werden, welche die Lichtabgabe der Leuchten bzw. allgemein das Verhalten der Leuchten während des Betriebs betreffen. Stattdessen kann im Rahmen der vorliegenden Erfindung insbesondere auch die Inbetriebnahme des Systems unterstützt werden, also beispielsweise eine Vergabe der Betriebs- und/oder Gruppen-Adressen an die Leuchten erfolgen. In allen Fällen können teils umständliche Arbeitsabläufe oder Eingaben von Bedieninformationen für einen Benutzer komfortabler gestaltet und erleichtert werden.

Vorzugsweise sind bei größeren Beleuchtungssystemen mehrere verteilt angeordnete Mittel zum Erfassen akustischer Signale vorgesehen. Diese können dabei sowohl Bestandteil der Leuchten selbst als auch von den Leuchten getrennt angeordnet werden. Im Falle einer Spracherkennung zum Erzeugen der Steuerinformationen für die Leuchten auf Basis der akustischen Signale kann hierbei insbesondere vorgesehen sein, dass diese Spracherkennung nicht unmittelbar von den Mitteln zum Erfassen, also beispielsweise den Mikrophonen bzw. den Leuchten, in denen sich die Mikrophone befinden, vorgenommen wird. Stattdessen werden die erfassten akustischen Signale im Wesentlichen unverändert an eine Zentrale übermittelt, welche diese dann auswertet und darauf basierend die Steuerbefehle generiert. Dabei kann insbesondere vorgesehen sein, dass auf Basis des Orts, an dem die akustischen Signale empfangen wurden, den Steuerbefehlen eine Adressinformation zugeordnet wird, also selbständig von dem System erkannt wird, für welche Leuchte(n) der Befehl gedacht ist.

Insgesamt ergeben sich auf Basis des erfindungsgemäßen Konzepts zahlreiche verschiedene Möglichkeiten, Steuerbefehle für ein Beleuchtungssystem zu generieren. Einige der sich ergebenden Möglichkeiten sollen nachfolgende anhand der beiliegenden Zeichnung näher erläutert werden. Es zeigen:
- Figur 1:: schematisch den Aufbau eines erfindungsgemäßen Beleuchtungssystems;
- Figuren 2a bis 2c:: eine Möglichkeit zur Nutzung der erfindungsgemäßen akustischen Steuerung während der Inbetriebnahme des Systems;
- Figur 3:: eine Möglichkeit zur Steuerung der Beleuchtung im Rahmen des erfindungsgemäßen Verfahrens;
- Figuren 4a bis 4c:: eine Möglichkeit zur Festlegung und Ansteuerung von Leuchten-Gruppen und
- Figuren 5a und 5b:: das Definieren und Nutzen von Beleuchtungsszenarios im Rahmen der vorliegenden Erfindung.

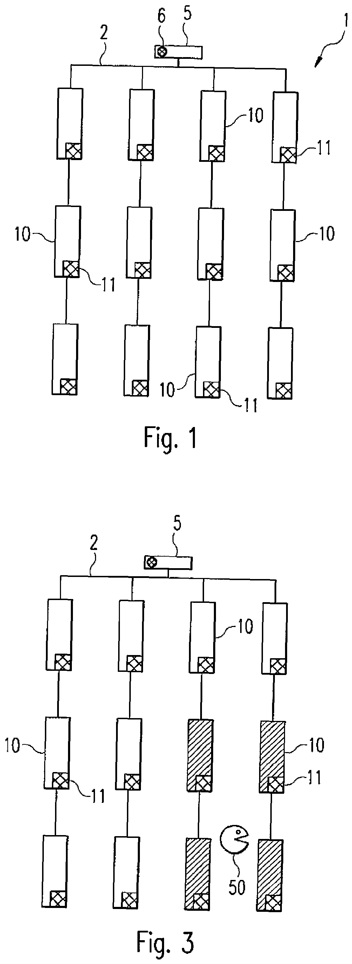

Figur 1 zeigt zunächst den allgemeinen Aufbau eines erfindungsgemäß ausgestalteten, allgemein mit dem Bezugszeichen 1 versehenen Beleuchtungssystems, wobei im vorliegenden Fall davon ausgegangen wird, dass das System durch Leuchten 10 gebildet wird, welche alle gemeinsam in einem Raum angeordnet sind. Selbstverständlich kann allerdings das erfindungsgemäße Konzept der akustischen Steuerung auch auf größere Systeme, die sich über mehrere Räume bzw. ganze Gebäude oder Gebäudekomplexe hinweg erstrecken, erweitert werden. Ferner wird der Einfachheit halber im vorliegenden Fall davon ausgegangen, dass alle Leuchten mit Mitteln zum Erfassen akustischer Signale ausgestattet sind, wobei dies - wie zu einem späteren Zeitpunkt noch näher erläutert - nicht zwingend der Fall sein muss.

Figur 1 zeigt also ein Beleuchtungssystem 1, welches aus zwölf in einem gleichmäßigen Raster angeordneten Leuchten 10 gebildet ist. Die Leuchten 10 weisen wie üblich mindestens eine Lichtquelle sowie eine interne Steuereinheit zum Ansteuern der Lichtquelle auf. Ferner ist jede Leuchte mit Mitteln zum Erfassen akustischer Signale versehen, die im vorliegenden Fall durch Mikrophone 11 gebildet werden.

Die Leuchten 10 sind an ein gemeinsames Busleitungssystem 2 angeschlossen, wobei die Topologie des Busleitungssystems 2 sowie die Art der Datenübertragung für die vorliegende Erfindung unerheblich ist. Insbesondere wäre auch denkbar, dass das Busleitungssystem 2 durch die Leitungen der allgemeinen Stromversorgung gebildet wird, wobei dann eine Kommunikation mittels der sog. Powerline-Carrier-Technologie erfolgt. Allerdings wäre auch eine drahtlose Kommunikation denkbar. Vorteilhaft ist allerdings, wenn die über das Busleitungssystem 2 bzw. allgemein das Kommunikationssystem erfolgende Datenübertragung auch die Übermittlung akustischer Signale ermöglicht. Ein weiterer Bestandteil des Systems 1 ist schließlich ein Befehlsgeber 5, der als zentraler Befehlsgeber für die Ansteuerung der Leuchten 10 verantwortlich ist. Selbstverständlich könnten allerdings auch weitere lokale Befehlsgeber in das System eingebunden werden, wobei insbesondere die Nutzung von Helligkeitssensoren, Anwesenheitssensoren und/oder lokalen Bediengeräten denkbar ist.

Die Übermittlung von Sprachsignalen bzw. allgemein von akustischen Signalen über das Kommunikationssystem 2 ist insbesondere dann erforderlich, wenn eine detaillierte Auswertung der akustischen Signale, insbesondere eine Spracherkennung, an zentraler Stelle, im vorliegenden Fall in der zentralen Steuereinheit 5 durchgeführt werden soll. In diesem Fall weist der Befehlsgeber die schematisch dargestellten Auswertemittel 6 zum Auswerten der akustischen Signale auf. Alternativ hierzu könnten die Leuchten 10 bzw. die Mittel zur Erfassung akustischer Signale 11 auch jeweils selbst entsprechende Spracherkennungsmittel aufweisen, die dann jeweils selbst die empfangenen akustischen Signale bewerten. Über das Kommunikationssystem 2 müssten dann lediglich noch die ausgewerteten Informationen übermittelt werden (bspw. eine Information hinsichtlich des erkannten Sprachbefehls), was selbstverständlich einen deutlich reduzierten Umfang an zu übertragenden Daten zur Folge hat. Andererseits muss in diesem Fall vielfach eine Spracherkennung durchgeführt werden, was wiederum einen höheren materiellen Aufwand nach sich zieht. Vorzugsweise ist deshalb vorgesehen, dass die entsprechenden Mittel zum Erfassen der akustischen Signale diese erfassten Signale über das Kommunikationssystem an die zentrale Steuereinheit 5 weiterleiten, welche dann eine entsprechende Auswertung der Signale vornimmt und darauf basierend Steuerbefehle erstellt.

Bei derartigen größeren Beleuchtungssystemen, wie sie in Figur 1 dargestellt sind, erfolgt in der Regel die Ansteuerung der Leuchten 10 durch die zentrale Steuereinheit 5. Mit Hilfe lokaler Bedienelemente können Benutzer allerdings individuellen Einfluss auf das Verhalten einzelner Leuchten nehmen. Soll mit Hilfe des Systems 1 bspw. ein größeres Büro ausgeleuchtet werden, so ist oftmals erwünscht, dass die Leuchten mit einer gewissen Grundhelligkeit betrieben werden, allerdings diejenigen Leuchten, welche Arbeitsplätze beleuchten, die gerade genutzt werden, eine höhere Helligkeit aufweisen. Bislang war es hierfür üblich, lokale Bedienelemente einzusetzen, so dass ein Benutzer dann die entsprechende Leuchte einschalten konnte. Problematisch in diesem Zusammenhang ist allerdings, dass derartige lokale Bediengeräte in der Regel nicht an jedem einzelnen Arbeitsplatz zur Verfügung stehen, sondern lediglich an bestimmten Positionen innerhalb des Raums angeordnet sind. Das individuelle Einschalten einzelner Leuchten bzw. das Betätigen derartiger lokaler Bediengeräte ist also nach wie vor mit einem gewissen Aufwand verbunden.

Derartige Probleme können mit Hilfe des erfindungsgemäßen Konzepts der Leuchtensteuerung mittels akustischer Signale vermieden werden. Durch das Erfassen und ggf. Spracherkennen entsprechender Signale kann eine komfortable Steuerung des Systems erhalten werden, ohne dass zusätzliche manuelle Bedienelemente oder dergleichen installiert werden müssten. Die erfindungsgemäße akustische Steuerung bietet dabei zahlreiche unterschiedliche Möglichkeiten zur Ansteuerung, wie anhand der nachfolgend beschriebenen Beispiele deutlich wird.

Eine Besonderheit der erfindungsgemäßen Steuerung mittels akustischer Signale besteht dabei auch darin, dass durch das ortsabhängige Erfassen der akustischen Signale eine Bedienung individueller Leuchten erzielt werden kann, ohne dass zusätzliche Positionsinformationen vorgegeben werden müssen. D.h., auf Basis der akustischen Signale sowie davon abhängig, an welcher Stelle diese empfangen werden, kann die zentrale Steuereinheit 5 gezielt einzelne Leuchten des Systems 1 ansteuern. Einerseits ist hierfür Voraussetzung, dass die Leuchten 10 durch die Steuereinheit individuell kontaktierbar sind. Hierzu weisen sie wie üblich entsprechende Betriebsadressen auf, über welche eine entsprechende Ansteuerung durch die Steuereinheit 5 ermöglicht wird, wobei diese Betriebsadressen vorzugsweise auch eine Anordnung der jeweiligen Leuchte innerhalb des Raums berücksichtigen. Andererseits sollte der Steuereinheit 5 bekannt sein, an welcher Position in dem Raum bzw. in dem Gebäude sich welche Leuchte befindet.

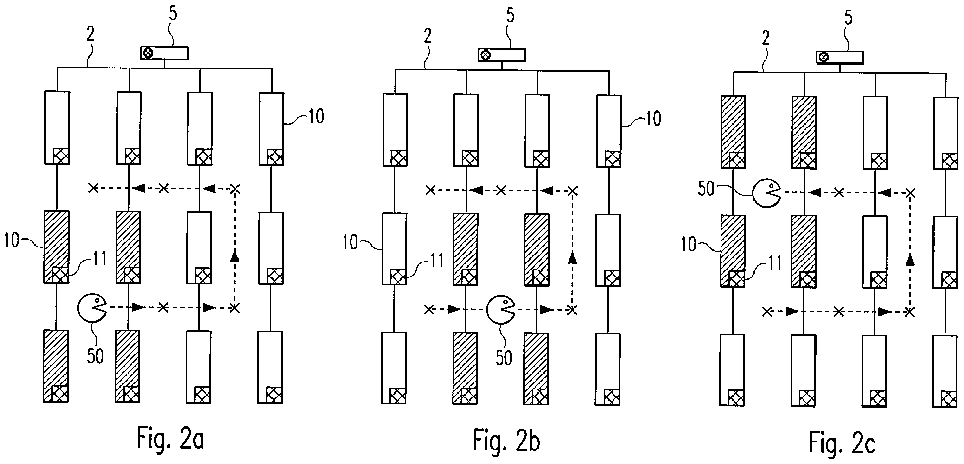

Das Vergeben der Betriebsadressen sowie Hinterlegen der Informationen hinsichtlich der Positionen der Leuchten innerhalb des Raumes bzw. Gebäudes könnte in herkömmlicher Weise im Rahmen einer Inbetriebnahme des Systems 1 erfolgen. Mit Hilfe der erfindungsgemäßen akustischen Steuerung besteht allerdings auch eine deutlich komfortablere Möglichkeit zur Inbetriebnahme, da erfindungsgemäß das System 1 in die Lage versetzt werden kann, selbstständig die Anordnung der Leuchten 10 zu erkennen. Die hierzu vorgesehene Vorgehensweise soll nachfolgend als erstes Anwendungsbeispiel des erfindungsgemäßen Konzepts anhand der Figuren 2a bis 2c erläutert werden.

Das selbstständige Erkennen der Anordnung der Leuchten 10 innerhalb des Systems 1 erfolgt gemäß den Figuren 2a bis 2c dadurch, dass sich eine Person 50 durch den Raum bewegt und in regelmäßigen Abständen einen entsprechenden Sprachbefehl ausgibt. Im vorliegenden Fall könnte dieser Sprachbefehl bspw. "Dies sind Nachbarn" lauten. Hierunter ist zu verstehen, dass alle Leuchten, deren Mikrophone 11 diesen Sprachbefehl - vorzugsweise mit einer gewissen Mindestlautstärke - erfassen, sich in Nachbarschaft zueinander befinden. Wie bereits erwähnt wird dieser Befehl vorzugsweise durch die Leuchten 10 nicht selbst erkannt. Stattdessen werden die von den Mikrophonen 11 der Leuchten 12 erfassten Signale an die zentrale Steuereinheit 5 weitergeleitet, welche die Signale entsprechend auswertet.

In den Figuren 2a bis 2c ist nunmehr dargestellt, in welcher Weise sich die Person 50 fortwährend durch den Raum bewegt und hierbei den oben erwähnten Sprachbefehl ausgibt. Diejenigen Leuchten 10, welche nach entsprechender Auswertung durch die zentrale Steuereinheit 5 diesen Befehl mit ausreichender Lautstärke empfangen haben, sind in diesem Fall dann dunkel dargestellt und stellen Nachbarn zueinander in dem Beleuchtungssystem 1 dar. Nachdem die Person 50 das gesamte Leuchtenraster abgelaufen und fortwährend den oben erwähnten Sprachbefehl ausgegeben hat, kann eine Gesamtauswertung der Informationen vorgenommen werden. Dabei kann aufgrund der Tatsache, dass sich immer andere Untergruppen von sich in Nachbarschaft zueinander befindenden Leuchten ergeben, letztendlich auf die Gesamtanordnung der Leuchten 10 rückgeschlossen werden. Die Steuereinheit 5 ist also in der Lage, darauf basierend jeweils die Positionen der einzelnen Leuchten 10 zu ermitteln und kann diesen dann entsprechende individuelle Betriebsadressen zuweisen.

Es ist unmittelbar ersichtlich, dass auf dem soeben beschriebenen Wege die Inbetriebnahme des Beleuchtungssystems 1 deutlich komfortabler gestaltet werden kann. Ein individuelles Identifizieren einzelner Leuchten durch einen Benutzer, welches einer Vergabe der Betriebsadressen vorausgeht, ist in diesem Fall nicht mehr erforderlich. Sobald die von der zentralen Steuereinheit 5 erhaltenen Informationen hinsichtlich der Anordnung der Leuchten 10 ausreichend sind, kann bspw. durch die Ausgabe eines optischen Signals, z. B. Einschalten aller Leuchten, signalisiert werden, dass der Inbetriebnahme-Prozess abgeschlossen ist.

Wie bereits erwähnt könnte allerdings die Inbetriebnahme des Systems 1 auch in herkömmlicher Weise erfolgen. In diesem Fall werden also den Leuchten 10 Betriebsadressen im Rahmen eines Verfahrens zugewiesen, wie es aus dem Stand der Technik hinlänglich bekannt ist. Zusätzlich werden allerdings in der zentralen Steuereinheit 5 auch entsprechende Informationen hinsichtlich der Position der jeweiligen Leuchte in dem System 1 hinterlegt.

Nach Inbetriebnahme des Systems 1 kann dann mit Hilfe der erfindungsgemäßen akustischen Steuerung eine komfortable Einstellung der Beleuchtung vorgenommen werden. Ein erstes einfaches Beispiel ist in Figur 3 dargestellt, wobei in diesem Fall die sich in einem bestimmten Bereich des Raums aufhaltende Person 50 lediglich den Sprachbefehl "Beleuchte meinen Bereich" ausgibt. Dieser Befehl beinhaltet also nicht die Angabe eines speziellen Bereichs bzw. einer speziellen Gruppe von Leuchten. Allerdings ist vorgesehen, dass dieser Befehl tatsächlich nur von denjenigen Leuchten umgesetzt wird, die diesen Befehl eindeutig verstanden haben. Unter "Verstehen" wird hierbei verstanden, dass das Sprachsignal, welches von dem Mikrofon einer Leuchte erfasst wird, eine vorgegebene Mindestlautstärke aufweist und im Rahmen der Spracherkennung - wo auch immer diese durchgeführt wird - eindeutig ausgewertet wird. Im vorliegenden Fall ist dies bei den wiederum dunkel dargestellten Leuchten, welche sich in der Umgebung der Person 50 befinden, der Fall. Diese werden dann bspw. aktiviert oder nehmen im Vergleich zu den anderen Leuchten des Systems eine größere Helligkeit ein. Selbstverständlich kann der oben erwähnte Befehl auch durch die Angabe einer gewünschten Helligkeit ergänzt werden.

Bei dem in Figur 3 dargestellten Anwendungsbeispiel könnte der Fall auftreten, dass eine der vier dargestellten Leuchten z.B. aufgrund der Richtung, in welche die Person 50 spricht, das Sprachsignal nicht eindeutig versteht und sich dementsprechend nicht einschalten würde. Für den Fall, dass zuvor diese vier Leuchten einer gemeinsamen Gruppe zugeordnet wurden, kann vorgesehen sein, dass in diesem Fall trotz allem auch diese Leuchte den entsprechenden Befehl ausführt, sich also gleichartig wie die weiteren Leuchten der entsprechenden Gruppe verhält. Hierdurch ist sichergestellt, dass bei einer unklaren Übermittlung der Sprachbefehle in bestimmte Richtungen trotz allem ein einheitliches Verhalten der entsprechenden Untergruppe von Leuchten vorliegt.

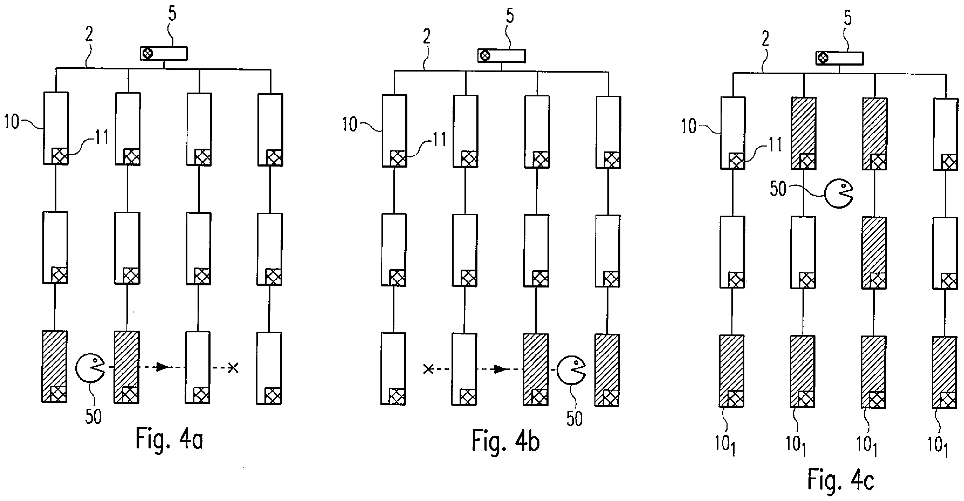

Das Zuordnen der Leuchten 10 zu verschiedenen Gruppen kann nach der Vergabe der individuellen Betriebsadressen erfolgen, wobei dies wiederum entweder in herkömmlicher Weise, also ausgehend von der zentralen Steuereinheit 5, oder im Rahmen der akustischen Ansteuerung erfolgen kann. Die Figuren 4a bis 4c zeigen hierbei ein Anwendungsbeispiel, bei dem sich in den Figuren 4a und 4b eine Person 50 durch den Raum bewegt und den Sprachbefehl "Dies ist Gruppe 1" ausgibt. Alle Leuchten, welche diesen Befehl empfangen haben, im vorliegenden Fall also die vier Leuchten der unteren Reihe, werden dann dieser ersten Gruppe zugeordnet.

Im Rahmen der Sprachsteuerung ist es nunmehr möglich, diese Leuchten anzusteuern, auch wenn sich die Person nicht in unmittelbarer Nähe der entsprechenden Leuchtengruppe befindet. Bspw. könnte sich die Person wie in Figur 4c dargestellt in einem anderen Bereich des Raums aufhalten und den Befehl "Schalte Gruppe 1 ein" ausgeben. Dieser Befehl wird bspw. von den drei in der Umgebung der Person befindlichen Leuchten erfasst, in der bereits beschriebenen Weise an die Steuereinheit 5 weitergeleitet und dort ausgewertet. Diese übermittelt dann an die Leuchten 10₁ der ersten Gruppe einen entsprechenden Steuerbefehl, um diese einzuschalten.

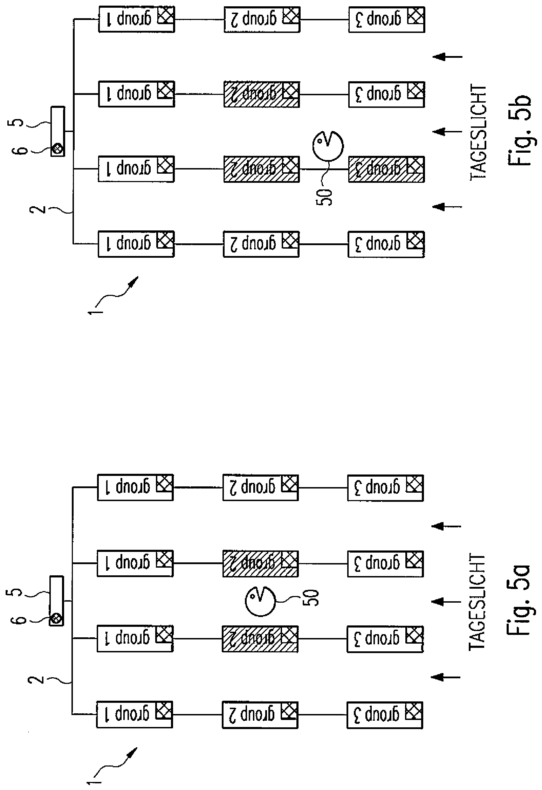

Schließlich kann die akustische Steuerung des Systems auch dazu genutzt werden, bestimmte Beleuchtungsszenarien vorab zu definieren und zu einem späteren Zeitpunkt aufzurufen. Die Figuren 5a und 5b zeigen einen Anwendungsfall, in dem zunächst ein entsprechendes Beleuchtungsszenario definiert und zu einem späteren Zeitpunkt abgerufen wird.

Zum Definieren eines Beleuchtungsszenarios ist es ausreichend, wenn sich die Person 50 an irgendeiner Position innerhalb des Raums befindet und dann entsprechende Sprachbefehle ausgibt, die bspw. wie folgt lauten könnten:
"Definition Beleuchtungsszenario Tagesbeleuchtung:
Gruppe 1 ein;
Gruppe 2 gedimmt;
Gruppe 3 aus".

Nach Abschluss der Definierung des entsprechenden Beleuchtungsszenarios kann dann durch Ausgabe des Sprachbefehls "Tagesbeleuchtung" die entsprechende Beleuchtungsszene aufgerufen werden. Die Leuchten nehmen dann entsprechende Helligkeitswerte an, wie sie in Figur 5b schematisch dargestellt sind. Auch hier wird der entsprechende Sprachbefehl nicht von allen Leuchten, sondern lediglich den dunkel gekennzeichneten Leuchten erkannt, aber nach entsprechender Auswertung durch die Steuereinheit 5 an alle Leuchten übermittelt.

Um die akustische Steuerung zusätzlich komfortabler zu gestalten, kann ferner vorgesehen sein, dass für den Fall, dass ein Sprachbefehl ordnungsgemäß erfasst wurde, dies durch die entsprechenden Leuchten visuell (bspw. eine kurze Veränderung der Helligkeit, das Aufleuchten einer Kontrolllampe oder dergleichen), akustisch oder dergleichen angezeigt wird. Das versehentliche Auslösen von Steuerbefehlen - bspw. durch die Verwendung entsprechender Wörter während einer Konversation - kann durch die Verwendung bestimmter Schlüsselwörter zur Aktivierung der Sprachsteuerung vermieden werden.

Abschließend ist anzumerken, dass alternativ zu der dargestellten Lösung nicht zwingend alle Leuchten Mittel zur Erfassung akustischer Signale auffassen müssen bzw. diese Mittel zur akustischen Erfassung überhaupt Bestandteil der Leuchten sind. Stattdessen wäre durchaus denkbar, dass bspw. nur jede zweite Leuchte ein Mikrophon zur Erfassung der akustischen Signale aufweist. In diesem Fall werden dann diejenigen Leuchten, die keine Mikrophone aufweisen, jeweils Leuchten mit Mikrophonen zugeordnet, wobei sie sich während des späteren Betriebs grundsätzlich in gleicher Weise wie die entsprechende benachbarte Leuchte mit Mikrophon verhalten. Ferner könnten Mikrophone auch vollkommen unabhängig von den Leuchten verteilt in dem Raum angeordnet werden. In diesem Fall muss allerdings dann zuvor manuell die Position der Mikrophone sowie die entsprechende Position der Leuchten in der zentralen Steuereinheit hinterlegt werden.

Die beschriebenen Beispiele verdeutlichen, dass das erfindungsgemäße Konzept die Ansteuerung einzelner Leuchten, aber auch von Leuchtengruppen oder sogar allen Leuchten deutlich erleichtert. Insbesondere sind keine zusätzlichen manuellen Bedienelemente, Fernsteuerungen oder dergleichen erforderlich. Auch die Inbetriebnahme im Hinblick auf die Vergabe von Adressen, die Zuordnung von Gruppen oder das Definieren unterschiedlicher Beleuchtungsszenarien wird vereinfacht, wobei - wie anhand der Figuren 2a bis 2c geschildert - ein besonderer Vorteil insbesondere auch darin besteht, dass das System selbstständig die Anordnung der Leuchten erkennen kann. Selbstverständlich können mit Hilfe der erfindungsgemäßen akustischen Steuerung auch zu einem späteren Zeitpunkt Änderungen oder Modifikationen der Gruppenzugehörigkeiten und dergleichen vorgenommen werden. Das System kann dabei ohne Weiteres durch zusätzliche Elemente wie z.B. Sensoren (Bewegungsmelder, Anwesenheitssensoren oder dergleichen) erweitert werden.

## Patentansprüche

1. Beleuchtungssystem (1), welches mehrere Leuchten (10) sowie
• Mittel zum Erfassen akustischer Signale (11) und
• Mittel zum Auswerten der erfassten akustischen Signale (6) aufweist,
wobei weiterhin eine Steuereinheit (5) vorgesehen ist, welche auf Basis der ausgewerteten akustischen Signale Steuerinformationen generiert und an die Leuchten (10) übermittelt,
**dadurch gekennzeichnet,**
**dass** die auf Basis der ausgewerteten akustischen Signale generierten Steuerinformationen eine Konfiguration des Beleuchtungssystems (1) betreffen, wobei das Beleuchtungssystem (1) derart ausgestaltet ist, dass bei der Konfiguration des Beleuchtungssystems (1) die Leuchten (10) verschiedenen Gruppen zugeordnet werden.

2. Beleuchtungssystem nach Anspruch 1,
**dadurch gekennzeichnet,**
**dass** das Auswerten der akustischen Signale eine Bewertung der Intensität der Signale umfasst.

3. Beleuchtungssystem nach Anspruch 1 oder 2,
**dadurch gekennzeichnet,**
**dass** das Auswerten der akustischen Signale eine Spracherkennung umfasst.

4. Beleuchtungssystem nach einem der vorherigen Ansprüche,
**dadurch gekennzeichnet,**
**dass** die auf Basis der ausgewerteten akustischen Signale generierten Steuerinformationen eine Steuerung der Lichtabgabe betreffen.

5. Beleuchtungssystem nach einem der vorherigen Ansprüche,
**dadurch gekennzeichnet,**
**dass** mehrere verteilt angeordnete Mittel zum Erfassen akustischer Signale (11) vorgesehen sind.

6. Beleuchtungssystem nach Anspruch 5,
**dadurch gekennzeichnet,**
**dass** die Mittel zum Erfassen akustischer Signale (11) Bestandteile zumindest einiger der Leuchten (10) sind.

7. Beleuchtungssystem nach einem der vorherigen Ansprüche,
**dadurch gekennzeichnet,**
**dass** die Mittel zum Auswerten der erfassten akustischen Signale (6) getrennt von den Mitteln zum Erfassen akustischer Signale (11) angeordnet sind, vorzugsweise Bestandteil einer zentralen Steuereinheit (5) sind.

8. Verfahren zum Betreiben eines Beleuchtungssystems (1), welches mehrere Leuchten (10) aufweist,
wobei akustische Signale erfasst und ausgewertet werden und auf Basis dieser Signale Steuerbefehle für die Leuchten (10) generiert werden,
**dadurch gekennzeichnet,**
**dass** die auf Basis der ausgewerteten akustischen Signale generierten Steuerbefehle eine Konfiguration des Beleuchtungssystems (1) betreffen, wobei bei der Konfiguration des Beleuchtungssystems (1) die Leuchten (10) verschiedenen Gruppen zugeordnet werden.

9. Verfahren nach Anspruch 8,
**dadurch gekennzeichnet,**
**dass** das Auswerten der akustischen Signale eine Bewertung der Intensität der Signale umfasst.

10. Verfahren nach Anspruch 8 oder 9,
**dadurch gekennzeichnet,**
**dass** das Auswerten der akustischen Signale eine Spracherkennung umfasst.

11. Verfahren nach einem der Ansprüche 8 bis 10,
**dadurch gekennzeichnet,**
**dass** die auf Basis der ausgewerteten akustischen Signale generierten Steuerbefehle eine Steuerung der Lichtabgabe betreffen.

12. Verfahren nach einem der Ansprüche 8 bis 11,
**dadurch gekennzeichnet,**
**dass** das Auswerten der akustischen Signale getrennt von dem Ort, an dem die Signale erfasst werden, erfolgt.

## Claims

1. A lighting system (1) which has several luminaires (10) as well as
• means for detecting acoustical signals (11) and
• means for evaluating the detected acoustical signals (6),
wherein a control unit (5) is additionally provided, which generates control information on the basis of the evaluated acoustical signals and transmits said control information to the luminaires (10),
**characterized in**
**that** the control information generated on the basis of the evaluated acoustical signals relates to a configuration of the lighting system (1), wherein the lighting system (1) is designed in such a manner that in the configuration of the lighting system (1) the luminaires (10) are assigned to different groups.

2. A lighting system according to Claim 1,
**characterized in**
**that** the evaluation of the acoustical signals comprises an assessment of the intensity of the signals.

3. A lighting system according to Claim 1 or 2,
**characterized in**
**that** the evaluation of the acoustical signals comprises a speech recognition.

4. A lighting system according to any one of the preceding claims,
**characterized in**
**that** the control information generated on the basis of the evaluated acoustical signals relates to a control of the light output.

5. A lighting system according to any one of the preceding claims,
**characterized in**
**that** several means arranged in a distributed manner are provided for the detection of acoustical signals (11).

6. A lighting system according to Claim 5,
**characterized in**
**that** the means for the detection of the acoustical signals (11) are components at least of some of the luminaires (10).

7. A lighting system according to any one of the preceding claims,
**characterized in**
**that** the means for evaluating the detected acoustical signals (6) are arranged separately from the means for detecting acoustical signals (11), preferably are a component of a central control unit (5).

8. A method for operating a lighting system (1), which has several luminaires (10), wherein acoustical signals are detected and evaluated and control commands for the luminaires (10) are generated on the basis of said signals,
**characterized in**
**that** the control commands generated on the basis of the evaluated acoustical signals relate to a configuration of the lighting system (1), wherein in the configuration of the lighting system (1) the luminaires (10) are assigned to different groups.

9. A method according to Claim 9,
**characterized in**
**that** the evaluation of the acoustical signals comprises an assessment of the intensity of the signals.

10. A method according to Claim 8 or 9,
**characterized in**
**that** the evaluation of the acoustical signals comprises a speech recognition.

11. A method according to any one of Claims 8 to 10,
**characterized in**
**that** the control commands generated on the basis of the evaluated acoustical signals relate to a control of the light output.

12. A method according to Claims 8 to 11,
**characterized in**
**that** the evaluation of the acoustical signals occurs separately from the location, at which the signals are detected.

## Revendications

1. Système d'éclairage (1), lequel comporte plusieurs luminaires (10) ainsi que
• des moyens destinés à détecter des signaux acoustiques (11) et
• des moyens destinés à analyser les signaux acoustiques (6) détectés,
une unité de commande (5) étant en outre prévue, laquelle, sur la base des signaux acoustiques analysés, génère des informations de commande et les transmet aux luminaires (10),
**caractérisé en ce que**
les informations de commande générées sur la base des signaux acoustiques analysés concernent une configuration du système d'éclairage (1), le système d'éclairage (1) étant constitué de telle sorte que, lors de la configuration du système d'éclairage (1), les luminaires (10) sont affectés à différents groupes.

2. Système d'éclairage selon la revendication 1,
**caractérisé en ce que**
l'analyse des signaux acoustiques comprend une évaluation de l'intensité des signaux.

3. Système d'éclairage selon la revendication 1 ou 2,
**caractérisé en ce que**
l'analyse des signaux acoustiques comprend une reconnaissance vocale.

4. Système d'éclairage selon l'une des revendications précédentes,
**caractérisé en ce que**
les informations de commande générées sur la base des signaux acoustiques analysés concernent une commande de la délivrance de lumière.

5. Système d'éclairage selon l'une des revendications précédentes,
**caractérisé en ce**
**qu'**il est prévu plusieurs moyens, disposés de façon répartie, destinés à la détection de signaux acoustiques (11).

6. Système d'éclairage selon la revendication 5,
**caractérisé en ce que**
les moyens destinés à la détection de signaux acoustiques (11) sont des composants d'au moins quelques-uns des luminaires (10).

7. Système d'éclairage selon l'une des revendications précédentes,
**caractérisé en ce que**
les moyens destinés à l'analyse des signaux acoustiques (6) détectés sont disposés séparément des moyens destinés à la détection de signaux acoustiques (11), sont de préférence un composant d'une unité de commande (5) centrale.

8. Procédé de fonctionnement d'un système d'éclairage (1) qui présente plusieurs luminaires (10),
des signaux acoustiques étant détectés et analysés, et des instructions de commande étant générées pour les luminaires (10) sur la base de ces signaux,
**caractérisé en ce que**
les instructions de commande générées sur la base des signaux acoustiques analysés concernent une configuration du système d'éclairage (1), les luminaires (10) étant affectés à différents groupes lors de la configuration du système d'éclairage (1).

9. Procédé selon la revendication 8,
**caractérisé en ce que**
l'analyse des signaux acoustiques comprend une évaluation de l'intensité des signaux.

10. Procédé selon la revendication 8 ou 9,
**caractérisé en ce que**
l'analyse des signaux acoustiques comprend une reconnaissance vocale.

11. Procédé selon l'une des revendication 8 à 10,
**caractérisé en ce que**
les informations de commande générées sur la base des signaux acoustiques analysés concernent une commande de la délivrance de lumière.

12. Procédé selon l'une des revendications 8 à 11,
**caractérisé en ce que**
l'analyse des signaux acoustiques s'effectue séparément de l'endroit où les signaux sont détectés.
